# EUROPEAN PATENT APPLICATION

(11) **EP 4 851 922 A1**
(43) Date of publication of application: **09.12.2026**
(21) Application number: 26182871.9
(22) Date of filing: 03.06.2026
(51) Int. Cl.: G06T 7/593, G06T 5/77

(54) **TWO-DIMENSIONAL TO SPATIAL VIDEO CONVERSION**

(30) Priority: 06.06.2025 US 202563818791 P; 02.06.2026 US 202619695101
(71) Applicant: Apple Inc., Cupertino, CA 95014 (US)
(72) Inventor: SOKOLOVSKY, Ron, Cupertino, 95014 (US); HIRSH, Eitan, Cupertino, 95014 (US); KAWAR, Bahjat, Cupertino, 95014 (US); FARBER, Miriam, Cupertino, 95014 (US); AMIR, Shir, Cupertino, 95014 (US); OSTROVSKY-BERMAN, Yaron, Cupertino, 95014 (US)
(74) Representative: COPA Copenhagen Patents

(57) **Abstract**

Various implementations disclosed herein include devices, systems, and methods that convert two-dimensional (2D) video into spatial three-dimensional (3D) video having different left/right eye views that may include holes requiring correction. For example, a process may obtain image data comprising multiple frames corresponding to at least a portion of a physical environment captured over time via an image capture device. The process may further estimate depth data for the image data and in response, generate first stereo image for a first frame of the multiple frames. The first stereo image pair includes a first image for a first eye view and second image for a second eye view. The first stereo image pair comprising a missing region. The process may further generate a second stereo image pair for the frame by modifying the missing region using at least a second frame of the multiple frames of the image data.

## Description

### TECHNICAL FIELD

The present disclosure generally relates to systems, methods, and devices that convert two-dimensional (2D) video into spatial video having different left and right eye views.

### BACKGROUND

Existing techniques for viewing converted spatial image content may not adequately facilitate enhancements of such an image with effects that resolve disparities or other aspects of the spatial image to provide efficient, desirable, and enhanced viewing experiences.

### SUMMARY

Various implementations disclosed herein include devices, systems, and methods that convert 2D video into spatial video having different left and right eye views for stereoscopic viewing. In some implementations, converting a 2D video into a spatial video may include estimating monocular based video depth to generate the left and right eye views that may include missing regions (e.g., holes or disparities caused by generating the left and right eye views) requiring correction. In some implementations, a process for resolving or correcting missing regions may include filling the missing regions using an inpainting process. For example, multiple frames from the 2D video may be obtained and tokenized by using an encoder to learn features that will be used to fill the missing regions. In some implementations, filling the missing regions may include adding random noise to the missing regions and iteratively denoising the missing regions using learned features. In some implementations, the process for resolving or correcting missing regions may be performed using information from multiple frames to fill missing regions in a single frame.

In some implementations, the process for resolving or correcting missing regions may include separating an image(s) or frame(s) into patches and/or using masks to selectively treat parts of the image(s) or frame(s) differently during the correction process to enable rapid and accurate results. Accordingly, the process for resolving or correcting missing regions may include determining whether a patch is: filled entirely with content, filled partially with content, or has no content and in response to determining patch content, the patches may be selectively used accordingly. For example, only patches with content (filled or partially filled) may be used by an encoder. Likewise, only some patches may be altered by the decoder. For example, patches entirely filled with content may not be altered. In some implementations, some patches may be used by an encoder and a decoder. For example, patches that have missing regions and content may be used by an encoder and a decoder.

In some implementations, converting the 2D video into spatial video may be configured to enable live video conversion by reducing an amount of frame change to create left and right images. For example, reducing an amount of frame change may include reducing an amount of content being shifted to the left and to the right to account for different eye viewpoints. In some implementations, creating left and right images may include using less than a full interpupillary distance (IPD) separation.

In some implementations, an electronic device has a processor (e.g., one or more processors) that executes instructions stored in a non-transitory computer-readable medium to perform a method. The method performs one or more steps or processes. In some implementations, the electronic device obtains image data comprising multiple frames corresponding to at least a portion of a physical environment captured over time via an image capture device. In some implementations, the electronic device estimates depth data for the image data and based on the image data and the depth data, generates a first stereo image for a frame of the multiple frames. The first stereo image pair comprises a first image for a first eye view and second image for a second eye view. the first stereo image pair comprising a missing region. The electronic device may further generate a second stereo image pair for the first frame by modifying the missing region using at least a second frame of the multiple frames of the image data.

In some implementations, an electronic device has a processor (e.g., one or more processors) that executes instructions stored in a non-transitory computer-readable medium to perform a method. The method performs one or more steps or processes. In some implementations, the electronic device obtains image data comprising multiple frames corresponding to an appearance of a physical environment captured over time via an image capture device in the physical environment. The electronic device estimates depth data for the image data based on the image data and the depth data, generates a stereo video comprising a stereo image pair for each frame of the multiple frames. The stereo image pair for each frame includes a first image for a first eye view and second image for a second eye view. The first eye view and second eye view correspond to viewpoints separated by a distance corresponding to a first inter-pupil distance (IPD) value. The electronic device further determines performance capabilities of the electronic device based on a current operational state of the device and based on the determined performance capabilities the stereo image pair may be adjusted for each frame such that the first eye view and second eye view correspond to viewpoints separated by a second IPD value differing from the first IPD value. The electronic device further provides the stereo video comprising the first eye view and second eye view corresponding to the viewpoints separated by the second IPD value for presentation to a user.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 illustrates an exemplary electronic device operating in a physical environment.
Figure 2 illustrates an example representing a viewpoint-based warping process that converts 2D video frames into stereo image pairs that may include disparities caused by generating left right eye views, in accordance with some implementations.
Figure 3 illustrates a framework that converts 2D image data such as a video into a spatial video and performs corrections for any resulting disparities, in accordance with some implementations.
Figure 4 is a block diagram of an example system illustrating a user device configured to convert a 2D video into spatial video that may include missing regions requiring correction, in accordance with some implementations.
Figure 5 is a flowchart representation of an exemplary method that converts 2D video into a complete spatial video, in accordance with some implementations.
Figure 6 is a flowchart representation of an exemplary method that converts 2D video into a complete spatial video by reducing an amount of content shift to account for different eye viewpoints, in accordance with some implementations.
Figure 7 is a block diagram of an electronic device in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

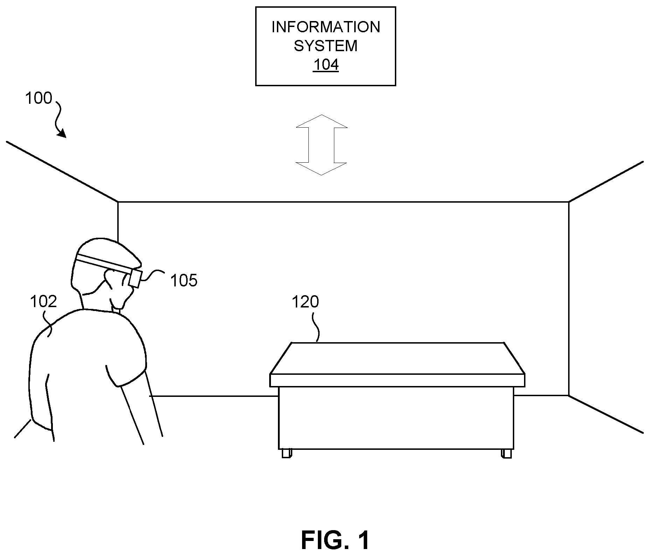

**Figure** 1 illustrates an exemplary electronic device 105 operating in a physical environment 100. Additionally, example environment 100 may include an information system 104 (e.g., a control framework or network) in communication with electronic device 105. In the example of Figure 1, the physical environment 100 is a room that includes a desk 120. The electronic device 105 may include one or more cameras, microphones, depth sensors, or other sensors that can be used to capture information about and evaluate the physical environment 100 and the objects within it, as well as information about the user 102 of electronic device 105. The information about the physical environment 100 and/or user 102 may be used to provide visual and audio content and/or to identify the current location of the physical environment 100 and/or the location of the user within the physical environment 100.

In some implementations, views of an extended reality (XR) environment may be provided to one or more participants (e.g., user 102 and/or other participants not shown) via electronic device 105 (e.g., a wearable device such as an HMD). Such an XR environment may include views of a 3D environment that is generated based on camera images and/or depth camera images of the physical environment 100 as well as a representation of user 102 based on camera images and/or depth camera images of the user 102. Such an XR environment may include virtual content that is positioned at 3D locations relative to a 3D coordinate system associated with the XR environment, which may correspond to a 3D coordinate system of the physical environment 100.

In some implementations, electronic device 105 and/or information system 104 may be configured to perform a process for converting 2D video into spatial video having different left and right eye views for stereoscopic viewing. For example, 2D image data may be captured via an image capture device or image sensors (e.g., a video camera) of electronic device 105 and/or other devices in physical environment 100. The image data may be captured over time and may include multiple frames (e.g., video frames) that correspond to an appearance of, for example, physical environment 100. Subsequently, depth data for the image data may be estimated. For example, the depth data may correlate to distances of portions of the image data from a viewpoint of the image capture device.

In some implementations, an incomplete stereo image for a frame of the multiple frames of the image data may be generated based on the image data and the depth data. The incomplete stereo image pair may include a first image for a first eye view (e.g., left eye) and second image for a second eye view (e.g., right eye) and may include a missing region (e.g., includes holes) that may arise due to missing information when shifting viewpoint perspectives. For example, when shifting an original 2D image to create a stereo pair, portions of a scene that were previously occluded (e.g., previously hidden parts of the scene) may become visible thereby causing missing regions (e.g., holes) due to lack of source information. Likewise, imperfect depth data may cause distortions or missing information in the synthesized views (i.e., stereo image pair).

In some implementations, a complete (corrected) stereo image pair may be generated for a frame of video or image sequence by inpainting missing regions using image data corresponding to multiple other frames from the video or image sequence. In some implementations, the complete stereo image pair may be generated by utilizing an encoder-decoder process to fill missing regions with content. For example, generating the complete stereo image pair may include selectively utilizing patches of each image of the incomplete stereo image pair using an encoder-decoder process based on whether each patch is entirely filled with content, partially filled with content, or empty of content. In some implementations, the encoder may be configured to utilize only patches that are filled entirely with content and patches that are partially filled with content. In some implementations, a decoder may be configured to only alter an appearance of patches that are partially filled with content and patches that are empty of content.

In some implementations, generating a complete stereo image pair may include utilizing all frames or all prior frames from a video to fill a missing region with content. Alternatively, generating a complete stereo image pair may include utilizing a fixed number of prior frames and a current frame from a video to fill a missing region with content.

In some implementations, generating a complete stereo image pair may include adding random noise to a missing region and iteratively denoising the missing region using learned features that may be used to fill the missing region with content.

In some implementations, electronic device 105 and/or information system 104 may be configured to perform an alternative process for converting 2D video into spatial video by capturing 2D image data (comprising multiple frames) over time and estimating associated depth data. The image data and depth data may be used to generate stereo video comprising a stereo image pair for each frame of the multiple frames. Each stereo image pair for each frame may include a first image for a first eye view (e.g., left eye) and second image for a second eye view (e.g., right eye) corresponding to viewpoints separated by a distance that is less than an inter-pupil distance (IPD) value. The stereo video may be subsequently presented to a user via, for example, playback such as, for example, converting a previously captured 2D video into 3D video (e.g., using a mobile device) for use on an audio/video player, etc.

In some implementations, the IPD value is a measured distance of the user or corresponds to an average or median IPD value of a population such as all users, all users in a particular group, etc. In some implementations, the distance may be determined based on a processing capability of electronic device 105 presenting the stereo video or a processing capability of another electronic device (differing from electronic device 105) presenting the stereo video. In some implementations, the distance may be determined based on a timing requirement for generating the stereo video for live presentation.

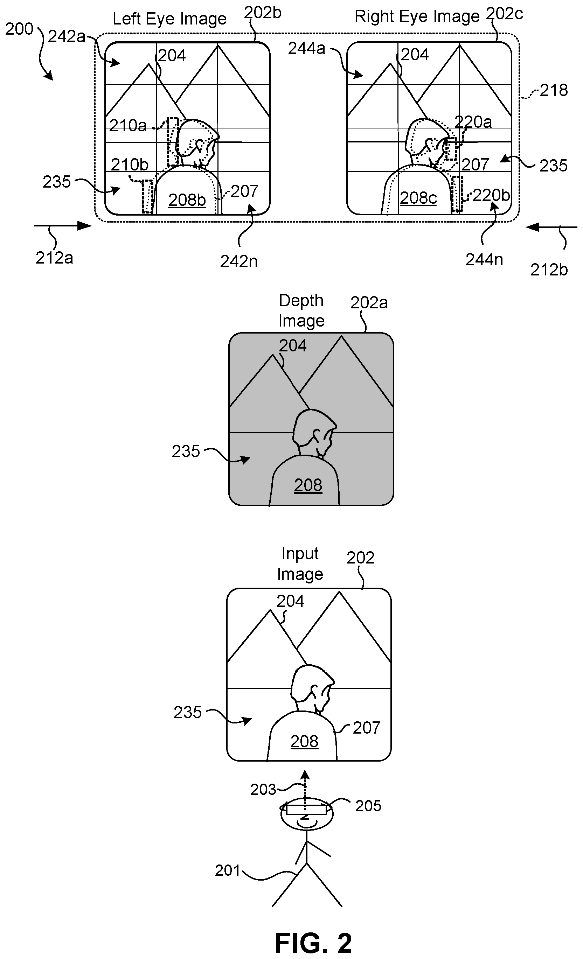

**Figure** 2 illustrates an example representing a viewpoint-based warping process 200 that converts 2D video frames (of an original 2D video) into stereo image pairs that may include disparities caused by generating left right eye views, in accordance with some implementations. For example, a left eye view (output) image 202b (e.g., a frame of video) and a right eye view (output) image 202c (e.g., a frame of video) may be generated from a (mono) input image 202 (e.g., a frame of video) associated with a viewpoint 203 of a user 201 with respect to a device 205 displaying the input image 202. The input image 202 may comprise, *inter alia,* a 2D frame of video representing an appearance of a scene comprising a person 208 in a foreground and mountains 204 and scenery 235 (e.g., grass or other vegetation) in a background. The input image 202 may include appearance values such as color values located at pixel positions. The viewpoint-based warping process 200 may include estimating a depth image 202a (e.g., a low resolution 3-dimensional (3D) model illustrating person 208 in a foreground and mountains 204 and scenery 235 in a background) that includes distances of portions of input image 202 from a capture device (e.g., a camera) viewpoint.

Left eye view image 202b corresponds to a left eye viewpoint of the scene with respect to input image 202 and may be generated by determining a first set of altered pixel positions for the depth values (for the left eye viewpoint) and identifying appearance (e.g., color) values for the first set of altered pixel positions based on the coordinate mapping (of the depth image 202a) and the input image 202. The left eye view image 202b represents a warped view 208b of the person 208 located at a first position (e.g., shifted horizontally in a direction 212a) differing from an original position 207 of the user 208 in the original input image 202. Likewise, left eye view image 202b may include regions 210a and 210b that include disparities or missing regions formed due to missing information when shifting perspectives. For example, when generating a new viewpoint (e.g., for the left eye), parts of a background (e.g., portions of mountains 204 or scenery 235) that were occluded (e.g., by person 208) in the original 2D input image 202 may become visible thereby causing gaps or holes within regions 210a and 210b.

Right eye view image 202c corresponds to a right eye viewpoint of the scene respect to input image 202 and may be generated by determining a second set of altered pixel positions for the depth values (e.g., for the right eye viewpoint) and identifying appearance (e.g., color) values for the second set of altered pixel positions based on the coordinate mapping (of the depth image 202a) and the input image 202. The right-eye view image 202c represents a warped view 208c of the person 208 located at a second position (e.g., shifted horizontally in a direction 212b) differing from the original position 207 of the user 208 in the original input image 202. The first position represents the user 208 at a different location within left eye image version 202a than the second position within right eye image version 202b. Accordingly, right eye view image 202c may include regions 220a and 220b that include disparities or holes formed due to missing information when shifting perspectives. For example, when generating a new viewpoint (e.g., for the right eye), parts of a background (e.g., portions of mountains 204 or scenery 235) that were occluded (e.g., by person 208) in the original 2D input image 202 may become visible thereby causing gaps or holes within regions 220a and 220b.

Accordingly, when viewed via an HMD, the combination of left eye image version 202a and right eye image version 202b form a stereo output image pair 218 depicting the scene (that includes regions 210a, 210b, 220a and 220b with gaps or holes) for viewing on a stereoscopic display of device 205 (e.g., an HMD). In some implementations, the gaps or holes within regions 210a, 210b, 220a and 220b may be resolved by filling the holes using an inpainting process. For example, multiple frames (e.g., input image 202 and additional frames) from the original 2D video may be obtained and tokenized by using an encoder to learn features that will be used to fill the holes. In some implementations, filling the holes may include adding random noise to the holes and iteratively denoising the holes using the learned features. In some implementations, the process for resolving or correcting holes may be performed using information from multiple input frames of the original 2D video to fill holes in a single frame (e.g., input image 202).

In some implementations, the process for resolving or filling holes may include separating an image(s) or frame(s) into spatial patches 242a...242n and 244a...244n and/or using masks to selectively treat parts of the image(s) or frame(s) differently during the correction process to enable rapid and accurate results. In some implementations, images 202b and 202c are separated into patches 242a...242n and 244a...244n by: (a) selecting a patch size such as, for example, dividing an image into patches comprising a 16x16 pixel size; (b) splitting the image into a grid such as, for example, a 256x256 image with 16x16 patches may yield 16 x 16 = 256 patches; and (c) encoding each patch into a 1D vector or processing with a linear projection to create a patch embedding vector. In some implementations, a shape and associated edges for each patch may be determined by utilizing patches (e.g., rectangular, square, etc.) having a fixed shape and size (e.g., 16×16 pixels) arranged in a regular grid across the image. In some implementations, the patches correspond to each image of the incomplete stereo image pair (e.g., left eye image version 202a and right eye image version 202b). In some implementations, a shape of masks may be determined via use semantic segmentation to guide where masks may begin and end thereby enabling the masks to include irregular shapes having a variable size.

In some implementations, the process for resolving or filling holes may be configured to determine whether a patch is: filled entirely with content, partially filled with content, or has no content and based on this determination, the patches may be selectively used accordingly. For example, only patches with content (filled or partially filled) may be used by an encoder. Likewise, only some patches may be altered by the decoder. For example, patches entirely filled with content may not be altered. In some implementations, some patches may be used by an encoder and a decoder. For example, patches that have holes and content may be used by an encoder and a decoder.

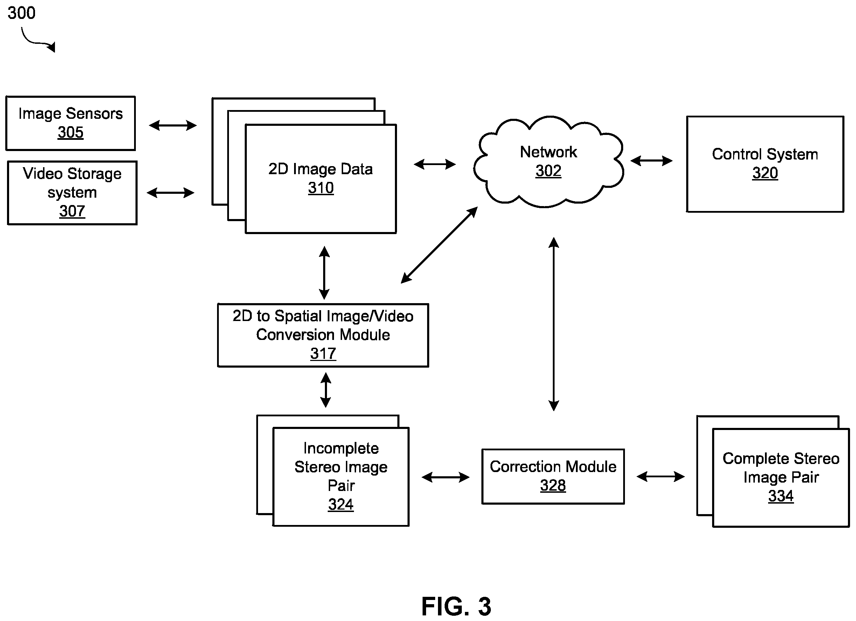

**Figure** 3 illustrates a framework 300 that converts 2D image data 310 such as a video into a spatial video and performs corrections for any resulting disparities, in accordance with some implementations. For example, framework 300 is configured to enable a depth estimation model (e.g., of a 2D to spatial image/video conversion module 317) to infer depth from a single frame of video (e.g., of 2D image data 310). The depth estimation model is configured to generate left and right eye views by shifting pixels based on disparity. This shifting may create occlusion holes or gaps in newly exposed regions and these holes or gaps may be filled using a diffusion-based inpainting model to selectively apply de-fusion techniques to synthesize missing content.

The framework 300 includes image sensors 305 (e.g., a camera(s) of electronic device 105 and/or within physical environment 100 of figure 1) and/or a video storage system 307 (e.g., a video streaming service) configured to obtain the 2D image data 310 for conversion to spatial video. Likewise, the framework 300 includes a 2D to spatial image/video conversion module 317, a correction module 328 and a control system 320 that, in some implementations, communicates over a data communication network 302, e.g., a local area network (LAN), a wide area network (WAN), the Internet, a mobile network, or a combination thereof. Components of 2D to spatial image/video conversion module 317 and correction module 328 may include any combination of specialized hardware and software and may be included by or integrated with a wearable device, control system 320 or any combination thereof.

In some implementations, 2D to spatial image/video conversion module 317 is configured to obtain 2D image data 310 and enable a monocular depth prediction using, *inter alia,* a deep learning model trained on monocular depth estimation. For example, a deep learning model may be configured to take a single 2D frame (of 2D image data 310) and estimate depth to create a depth map used shift pixels to generate left-eye and right-eye views from the single 2D frame. For example, a left-eye view may be created by shifting pixels to the right and a right-eye view is created by shifting pixels to the left. In some instances, this disparity-based image warping process may result in disocclusions (e.g., holes) where background regions are revealed thereby creating an incomplete stereo image pair 324 that includes these disocclusions. For example, a pixel warping process may move or shift content to create the stereo images and due to this movement, some regions of the left and right eye views may become empty (e.g., holes appear where no information existed before). Accordingly, correction module 328 is configured to execute a temporal based transformer for inpainting (e.g., a diffusion model) to resolve or fill the aforementioned regions (holes) to generate a complete stereo image pair 334. Alternatively, correction module 328 may be configured use an algorithmic rule based approach to perform an inpainting process to resolve or fill the aforementioned holes or missing regions to generate a complete stereo image pair without any disparities. For example, a rule-based inpainting process may include filling holes from nearby pixels (e.g., using interpolation techniques), using mirrored pixels from an opposite eye view, applying texture synthesis for non-uniform areas, etc.

In some implementations, correction module 328 may be configured to tokenize multiple consecutive video frames (e.g., 16) of 2D image data 310 and extract features using a transformer-based encoder. In response, the missing regions (holes) may be filled through a diffusion process that: (a) adds random noise to the holes; (b) utilizes a learned transformer decoder to iteratively refine the missing regions; and (c) returns the frames to the RGB domain after filling the regions to generate the complete stereo image pair 334.

In some implementations, framework 300 enables frame tokenization and transformer-based encoding to (a) divide each video frame of 2D image data 310 into patches; (b) use a transformer-based video encoder to extract spatial-temporal features; and (c) identify missing regions using masks. For example, each frame of 2D image data 310 may be segmented into patches and different encoder and/or decoder-based treatments may be applied based on an associated visibility. For example, each frame of 2D image data 310 may be separated into patches by: (a) selecting a patch size such as, for example, dividing an image into patches comprising a 16x16 pixel size; (b) splitting the image into a grid such as, for example, a 256x256 image with 16x16 patches may yield 16 x 16 = 256 patches; and (c) encoding each patch into a 1D vector or processing with a linear projection to create a patch embedding vector. In some implementations, a shape and associated edges for each patch may be determined by utilizing patches (e.g., rectangular, square, etc.) having a fixed shape and size (e.g., 16×16 pixels) arranged in a regular grid across the image. Likewise, edge boundaries may be determined based on pixel coordinates. In some implementations, the patches correspond to each image of an incomplete stereo image pair. In some implementations, a shape of masks may be determined via use semantic segmentation to guide where masks may begin and end thereby enabling the masks to include irregular shapes having a variable size.

In some implementations, fully visible patches that have no missing regions (i.e., all content with no holes) may be used by the encoder only (i.e., used as reference in the encoder but not modified). In some implementations, patches having fully missing regions (i.e., no content with only holes) may be used by a decoder only. In this instance, the regions are not used during encoding and are only filled during decoding. In some implementations, partially filled patches (i.e., having missing regions and content) may be used by both the encoder and decoder. In this instance, an encoder is configured to extract known features while a decoder fills in the missing regions or holes.

In some implementations, correction module 328 may be configured to enable a process for live stereoscopic conversion by minimizing frame modifications to ensure real-time processing while maintaining 3D depth perception. In some implementations, to enable real-time or low-latency conversion of 2D video into spatial video, a shift for left and right eye views may be reduced. For example, instead of fully shifting content by an interpupillary distance (IPD) (e.g., 6-7 cm), correction module may be configured to dynamically reduce a shift between left and right eye views such that a partial shift (e.g., 30-50% of full IPD) may be performed to minimize large regions or holes requiring inpainting. In some implementations, an amount of (disparity) shift may be selected based on, for example, a desired depth effect (e.g., subtle 3D vs. deep stereoscopic effect), etc.

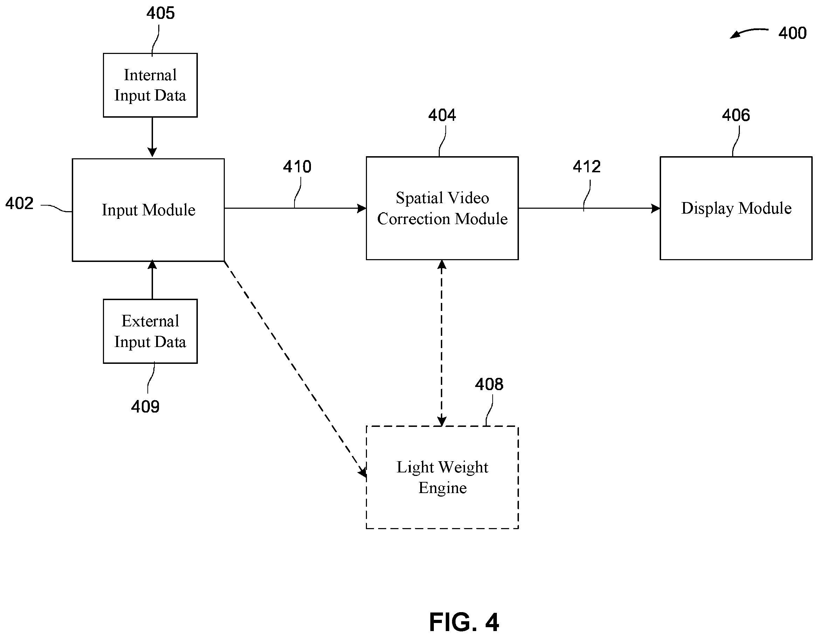

**Figure** 4 is a block diagram of an example system illustrating a user device 400 configured to convert a 2D video into spatial video by estimating monocular based video depth to generate the left and right eye views that may include holes (e.g., missing regions caused by generating the left and right eye views) requiring correction. In some implementations, user device 400 may enable a process filling the holes using an inpainting process. The user device 400 (e.g., an HMD) may include an input module 402, a spatial video correction module 404, a display module 406, and a light-weight engine 408.

In some embodiments, input module 402 is configured to accept internal input data 405 (e.g., internal input data from sensors of the user device 400) associated with an appearance of a physical environment captured over time via an image capture device such as a single video camera. For example, internal input data 405 may include multiple frames of video (e.g., 2D image data 310 as illustrated in figure 3).

In some embodiments, input module 402 is configured to accept external input data 409 (e.g., external input data from sensors or storage external to user device 400) including a video feed or images, for example, from a remote location such as a video streaming server.

In some embodiments, input module 402 is configured to enable a depth estimation model to infer depth from a single frame of video. Input module 402 may be configured to use the depth estimation model to generate left and right eye views by shifting pixels based on disparity. For example, a left-eye view may be created by shifting pixels to the right and a right-eye view is created by shifting pixels to the left. In some instances, this disparity-based image warping process may result in disocclusions (e.g., holes) where background regions are revealed thereby creating an incomplete stereo image pair that includes these disocclusions. For example, a pixel warping process may move or shift content to create the stereo images and due to this movement, some regions of the left and right eye views may become empty (e.g., holes appear where no information existed before).

Input 410 from input module 402 can be fed to spatial video correction module 404. Spatial video correction module 404 can include one or more learning-based and/or non-learning-based models for perceiving, synthesizing, and inferring information for performing an inpainting process. Persons skilled in the art will appreciate that the spatial video correction module 404 can include any suitable number of rule-based process(es) to generate output 412 based on input 410.

In some embodiments, spatial video correction module 404 may be used to deterministically detect an incomplete stereo image pair (e.g., generated via input module 402) comprising disparities or holes caused by generating left and right eye views and use an algorithmic rule-based approach to perform an inpainting process to resolve or fill the aforementioned holes or missing regions to generate a complete stereo image pair without any disparities. For example, a rule-based inpainting process may include filling holes from nearby pixels (e.g., using interpolation techniques), using mirrored pixels from an opposite eye view to fill holes, applying texture synthesis for non-uniform areas, etc. Likewise, a frame-by-frame adjustment may be used to maintain a temporal consistency. For example, if a camera is moving, previous frames may be used to fill missing regions. Likewise, motion estimation may enable extrapolation of missing data in a next frame. In some embodiments, spatial video correction module 404 may be used to deterministically use patches or pixel data from other frames in a video that contain valid views of the content corresponding to the holes (e.g., disoccluded regions) in the current frame. For example, spatial video correction module 404 may be configured to determine correspondence between hole regions in the current frame and matching content in temporally adjacent frames and use that content to fill in the missing areas during an inpainting process. The correspondence and inpainting processes may include a depth-aware warping process that includes reproject pixels from one frame to another using estimated depth and camera motion. Likewise, optical flow processes may be used to estimate per-pixel motion to track where content moved across frames.

In some embodiments, spatial video correction module 404 may be used to detect an incomplete stereo image pair (e.g., generated via input module 402) comprising missing regions or holes caused by generating left and right eye views and execute a temporal based transformer for inpainting (e.g., a diffusion model) to resolve or fill the aforementioned holes to generate a complete stereo image pair 334 without any disparities.

In some embodiments, user device 400 may optionally elect to use a light weight engine 408 instead of spatial video correction module 404 to detect an incomplete stereo image pair comprising missing regions or holes caused by generating left and right eye views and perform an inpainting process to resolve or fill the aforementioned disparities to generate a complete stereo image pair without any holes. The light-weight engine 408 may be a non-learning network.

In some embodiments, display module 406 is configured to accept results from spatial video correction module 404 and/or a light-weight engine 408.

For example, output from spatial video correction module 404 and/or a light-weight engine 408 is provided to display module 406, where display module 406 provides a view of a complete stereo image pair 334 without any missing regions.

Persons of ordinary skill in the art will appreciate that spatial video correction module 404 can include any suitable machine learning models that are well-known or widely available such as regression techniques, classification techniques, neural networks, and deep learning networks. For instance, spatial video correction module 404 can include neural networks such as Artificial Neural Network (ANN), Convolutional Neural Network (CNN), Recurrent Neural Network (RNN), Adversarial Network (GAN), Reinforcement Learning Model (RLM), Encoder/Decoder Networks, and/or Transformer-Based Models (e.g., Bidirectional Encoder Representations from Transformers (BERT), Generative Pre-trained Transformer (GPT), and/or a multi-modal large language model (LLM)). Additionally or alternatively, persons of ordinary skill in the art will appreciate that spatial video correction module 404 can be any suitable non-learning processes such as rule-based systems, heuristics, decision trees, knowledge-based systems, statistical or stochastic systems, and expert systems.

In instances where spatial video correction module 404 is a machine-learning based model, the model may be trained to enable execute a temporal based transformer for inpainting (e.g., a diffusion model) to resolve or fill missing regions or holes to generate a complete stereo image pair 334. For example, multiple consecutive video frames of 2D image data may be tokenized and features may be extracted using a transformer-based encoder. The missing regions or holes are then filled through a diffusion process that: (a) adds random noise to the holes; (b) utilizes a learned transformer decoder to iteratively refine the missing regions; and (c) returns the frames to the RGB domain after filling the regions to generate a complete stereo image pair using one or more well-known or widely available training techniques such as supervised learning, semi-supervised learning, unsupervised learning, and/or reinforcement learning techniques. The training data can include images and contextual information.

In some embodiments, spatial video correction module 404 can be trained with both synthetic and non-synthetic data.

In some embodiments, spatial video correction module 404 can be deployed as one or more generative models, where content is automatically generated by one or more computers in response to a request to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally may include visual content (e.g., images, graphics, and/or video) and/or text content.

In some embodiments, novel automatically-generated content is referred to as generative content (e.g., generative images, generative graphics, generative video, and/or generative text). Generative content is typically generated based on a prompt input 410 to the spatial video correction module 404. Input module 402 optionally includes one or more pre-processing steps to adjust the input before it is used by an artificial intelligence (AI) model to generate an output image (e.g., adjustment to a user-provided prompt, creation of a system-generated prompt, and/or AI model selection). Display module 406 optionally includes one or more post-processing steps to adjust the output 412 by the spatial video correction module 404 (e.g., passing the AI model output to a different AI model, upscaling, downscaling, cropping, formatting, and/or adding or removing metadata) before the output 412 of the spatial video correction module 404 used for other purposes such as being provided to a different software process for further processing or being presented (e.g., visually) to a user.

In instances where spatial video correction module 404 is a non-learning system, non-learning-based spatial video correction module 404 can use a pre-defined set of rules or a pre-defined structure to make decisions based on the inputs that the process sees. For example, the spatial video correction module 404 can be used to guide a deterministic approach to detect an incomplete stereo image pair (e.g., generated via input module 402) comprising disparities or holes caused by generating left and right eye views and use an algorithmic rule-based approach to perform an inpainting process to resolve or fill the aforementioned holes or missing regions to generate a complete stereo image pair without any disparities. For example, a rule-based inpainting process may include filling holes from nearby pixels (e.g., using interpolation techniques), using mirrored pixels from an opposite eye view to fill holes, applying texture synthesis for non-uniform areas, etc. Likewise, a frame-by-frame adjustment may be used to maintain a temporal consistency. For example, if a camera is moving, previous frames may be used to fill missing regions. Likewise, motion estimation may enable extrapolation of missing data in a next frame. In some embodiments, spatial video correction module 404 may be used to deterministically use patches or pixel data from other frames in a video that contain valid views of the content corresponding to the holes (e.g., disoccluded regions) in the current frame. For example, spatial video correction module 404 may be configured to determine correspondence between hole regions in the current frame and matching content in temporally adjacent frames and use that content to fill in the missing areas during an inpainting process. The correspondence and inpainting processes may include a depth-aware warping process that includes reproject pixels from one frame to another using estimated depth and camera motion. Likewise, optical flow processes may be used to estimate per-pixel motion to track where content moved across frames.

Some embodiments described herein can include use of learning and/or non-learning-based process(es). The use can include collecting, pre-processing, encoding, labeling, organizing, analyzing, recommending and/or generating data. Entities that collect, share, and/or otherwise utilize user data should provide transparency and/or obtain user consent when collecting such data. The present disclosure recognizes that the use of the data in rule-based or machine learning (ML) based process(es) can be used to benefit users. For example, the data can be used to train models that can be deployed to improve performance, accuracy, and/or functionality of applications and/or services. Accordingly, the use of the data enables the rule-based process(es) or ML to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the rule-based process(es) can be used to are also contemplated by the present disclosure.

The present disclosure contemplates that, in some embodiments, data used by the rule-based process(es) can be used to include publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with the rule-based process(es), should attempt to comply with well-established privacy policies and/or privacy practices.

For example, such entities may implement and consistently follow policies and practices recognized as meeting or exceeding industry standards and regulatory requirements for developing and/or training ML-based process(es). In doing so, attempts should be made to ensure all intellectual property rights and privacy considerations are maintained. Training should include practices safeguarding training data, such as personal information, through sufficient protections against misuse or exploitation. Such policies and practices should cover all stages of the process(es) development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, ML-based process(es) may utilize models that may be trained (e.g., supervised learning or unsupervised learning) using various training data, including data collected using a user device. Such use of user-collected data may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some implementations, data from multiple devices can be combined in a privacy-preserving manner to train an ML model.

In some embodiments, the present disclosure contemplates that data used for spatial video correction module 404 may be kept strictly separated from platforms where the spatial video correction module 404 are deployed and/or used to interact with users and/or process data. In such embodiments, data used for offline training of the spatial video correction module 404 may be maintained in secured datastores with restricted access and/or not be retained beyond the duration necessary for training purposes. In some embodiments, the spatial video correction module 404 may utilize a local memory cache to store data temporarily during a user session. The local memory cache may be used to improve performance of the rule-based process(es). However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during ML training and/or use of rule-based process(es). The spatial video correction module 404 should be monitored for changes in underlying data distribution such as concept drift or data skew that can degrade performance of the spatial video correction module 404 over time.

In some embodiments, the spatial video correction module 404 are trained using a combination of offline and online training. Offline training can use curated datasets to establish baseline model performance, while online training can allow the spatial video correction module 404 to continually adapt and/or improve. The present disclosure recognizes the importance of maintaining strict data governance practices throughout this process to ensure user privacy is protected.

In some embodiments, the spatial video correction module 404 processes may be designed with safeguards to maintain adherence to originally intended purposes, even as the spatial video correction module 404 adapts based on new data. Any significant changes in data collection and/or applications of spatial video correction module 404 use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the spatial video correction module 404 and/or for use as input during the inference stage of such systems. In yet another example, the present technology should be configured to allow users to be able to select to limit the length of time data is maintained or entirely prohibit the use of their data for use by the rule-based process(es). In addition to providing "opt in" and "opt out" options, the present disclosure contemplates providing notifications relating to the access or use of personal information. For instance, a user can be notified when their data is being input into the spatial video correction module 404 for training or inference purposes, and/or reminded when the spatial video correction module 404 generates outputs or make decisions based on their data.

The present disclosure recognizes spatial video correction module 404 should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to or failures to cite third-party products and/or services in the outputs should not be construed as endorsements or affiliations by the entities providing the rule-based process(es). Generated content can be filtered for potentially inappropriate or dangerous material prior to being presented to users, while human oversight and/or ability to override or correct erroneous or undesirable outputs can be maintained as a failsafe.

The present disclosure further contemplates that users of the spatial video correction module 404 should refrain from using the services in any manner that infringes upon, misappropriates, or violates the rights of any party. Furthermore, the spatial video correction module 404 should not be used for any unlawful or illegal activity, nor to develop any application or use case that would commit or facilitate the commission of a crime, or other tortious, unlawful, or illegal act including misinformation, disinformation, misrepresentations (e.g., deepfakes), deception, impersonation, and propaganda. The spatial video correction module 404 should not violate, misappropriate, or infringe any copyrights, trademarks, rights of privacy and publicity, trade secrets, patents, or other proprietary or legal rights of any party, and appropriately attribute content as required. Further, the spatial video correction module 404 should not interfere with any security, digital signing, digital rights management, content protection, verification, or authentication mechanisms. The spatial video correction module 404 should not misrepresent machine-generated outputs as being human-generated.

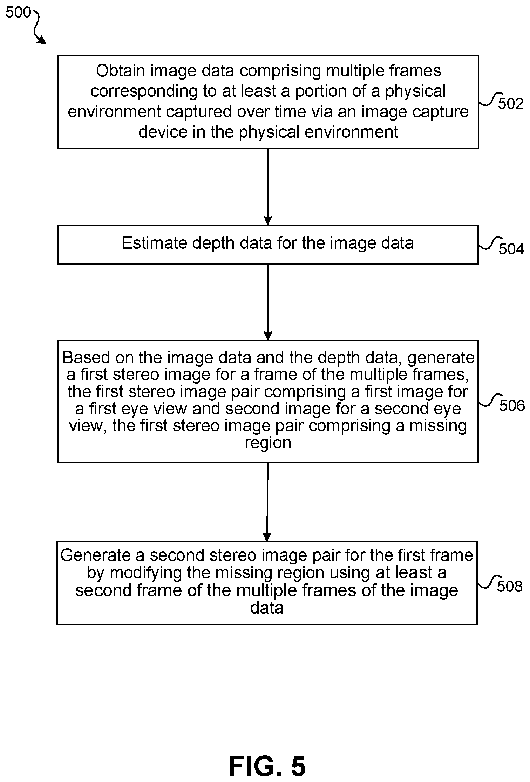

**Figure** 5 is a flowchart representation of an exemplary method 500 that converts 2D video into a complete spatial (3D) video, in accordance with some implementations. In some implementations, the method 500 is performed by a device, such as a mobile device, desktop, laptop, HMD, or server device. In some implementations, the device has a screen for displaying images and/or a screen for viewing stereoscopic images such as an HMD (HMD such as e.g., device 105 of Figure 1). In some implementations, the method 500 is performed by processing logic, including hardware, firmware, software, or a combination thereof. In some implementations, the method 500 is performed by a processor executing code stored in a non-transitory computer-readable medium (e.g., a memory). Each of the blocks in the method 500 may be enabled and executed in any order.

At block 502, the method 500 obtains image data that includes multiple frames (e.g., video) corresponding to an appearance or at least a portion of an environment (e.g., a physical environment, a physical environment including virtual content, a virtual environment, or any other environment that can have missing content when converting from 2D image data into 3D stereo image data) captured over time via an image capture device (e.g., a single video camera) in the environment. For example, 2D image data 310 that includes multiple frames of video may be obtained as described with respect to figure 3.

At block 504, the method 500 estimates depth data for the image data. For example, a depth image 202a that includes distances of portions of an input image 202 from a capture device viewpoint may be estimated as described, *supra,* with respect to figure 2.

At block 506, the method 500 generates a first stereo image pair for a first frame of the multiple frames based on the image data and the depth data. In some implementations, the first stereo image pair includes a first image for a first eye view (e.g., a left eye view image 202b as described with respect to figure 2) and second image for a second eye view (e.g., right eye view image 202c as described with respect to figure 2). The first stereo image pair can be an incomplete stereo image pair that includes at least one missing region such as regions 210a, 210b, 220a, and/or 220b in one or both of its images as described with respect to figure 2.

At block 508, the method 500 generates a second (modified) stereo image pair for the first frame by modifying the missing region using at least a second frame of the multiple frames of the image data. The modified stereo image pair can be based on the image pair that contains a missing region but that has been modified by inpainting the missing region using the image data corresponding to multiple frames of the plurality of frames. For example, a complete stereo image pair 334 may be generated as described with respect to figure 3.

In some implementations, the method 500 generates a second (e.g., complete) stereo image pair may include utilizing an encoder-decoder process to fill the missing region with content. For example, generating the second stereo image pair may include selectively utilizing patches of each image of the first stereo image pair in the encoder-decoder process. The patches may be identified based on a patch grid, a patch size, or a patch shape as described with respect to figure 4. The patches may be selectively utilized in the encoder-decoder process based on whether the patches are filled entirely with content, partially filled with content, or empty of content. In some implementations, an encoder may utilize only patches that are filled entirely with content and patches that are partially filled with content. In some implementations, a decoder only alters the appearance of patches that are partially filled with content and patches that are empty of content. In some implementations, generating the complete stereo image pair may include utilizing all of the multiple frames to fill the missing region with content. Alternatively, generating the complete stereo image pair may include utilizing a fixed number of prior frames and a current frame of the multiple frames to fill the missing region with content. In some implementations, generating the second stereo image pair may include utilizing all prior frames of the multiple frames to fill the missing region with content. In some implementations, generating the second stereo image pair may include adding random noise to the missing region and iteratively denoising the missing region using learned features that will be used to fill the missing region with content.

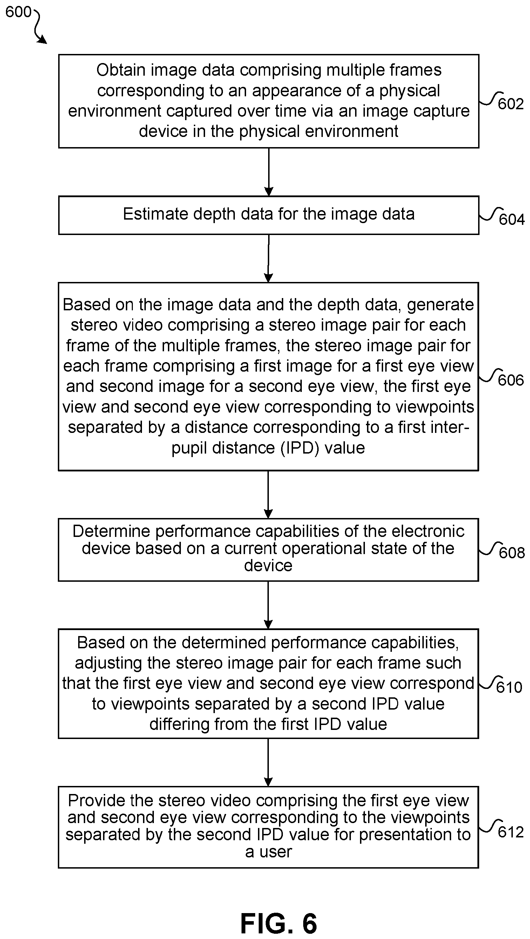

**Figure** 6 is a flowchart representation of an exemplary method 600 that converts 2D video into a complete spatial (3D) video by reducing an amount of content shift to account for different eye viewpoints, in accordance with some implementations. In some implementations, the method 600 is performed by a device, such as a mobile device, desktop, laptop, HMD, or server device. In some implementations, the device has a screen for displaying images and/or a screen for viewing stereoscopic images such as an HMD (HMD such as e.g., device 105 of Figure 1). In some implementations, the method 600 is performed by processing logic, including hardware, firmware, software, or a combination thereof. In some implementations, the method 600 is performed by a processor executing code stored in a non-transitory computer-readable medium (e.g., a memory). Each of the blocks in the method 600 may be enabled and executed in any order.

At block 602, the method 600 obtains image data that includes multiple frames (e.g., video) corresponding to an appearance of a physical environment captured over time via an image capture device (e.g., a single video camera) in the physical environment. For example, 2D image data 310 that includes multiple frames of video may be obtained as described with respect to figure 3.

At block 604, the method 600 estimates depth data for the image data. For example, a depth image 202a that includes distances of portions of an input image 202 from a capture device viewpoint may be estimated as described, supra, with respect to figure 2.

At block 606, the method 600 generates a stereo video comprising a stereo image pair for each frame of the multiple frames based on the image data and the depth data. The stereo image pair for each frame includes a first image for a first eye view (e.g., left eye view image 202b as described with respect to figure 2) and a second image for a second eye view (e.g., right eye view image 202c as described with respect to figure 2). The first eye view and second eye view correspond to viewpoints separated by a distance that is corresponding to a first inter-pupil distance (IPD) value. For example, an IPD value such as 30-50% of a full IPD value as described with respect to figure 3. In some implementations, the first IPD value may correspond to, for example, a measured distance of the user, average or median IPD value of a population (e.g., all users, all users in a particular group, etc.), etc. In some implementations, a distance between viewpoints may be determined based on a processing capability of an electronic device (same device) presenting the stereo video, a processing capability of another electronic device (different device) presenting the stereo video, a timing requirement for generating the stereo video for live presentation.

At block 608, the method 600 determines performance capabilities of the electronic device based on a current operational state of the device. For example, a current performance capability or operating state may include, *inter alia,* latency requirements (e.g., AR/VR/XR interactive scenes), desired depth effect (e.g., shallow vs. deep 3D), user-selected comfort or performance modes, etc. as described with respect to figure 3.

At block 610, the method 600 (based on the determined performance capabilities) adjusts the stereo image pair for each frame such that the first eye view and second eye view correspond to viewpoints separated by a second IPD value differing (e.g., less than or greater than) from the first IPD value. For example, an applied shift may be less than an ideal inter-pupillary distance (IPD)-based stereo disparity.

At block 612, the method 600 provides the stereo video comprising the first eye view and second eye view corresponding to the viewpoints separated by the second IPD value for presentation to a user for, *inter alia,* live video presentation, streaming presentation, etc. as described with respect to figure 3.

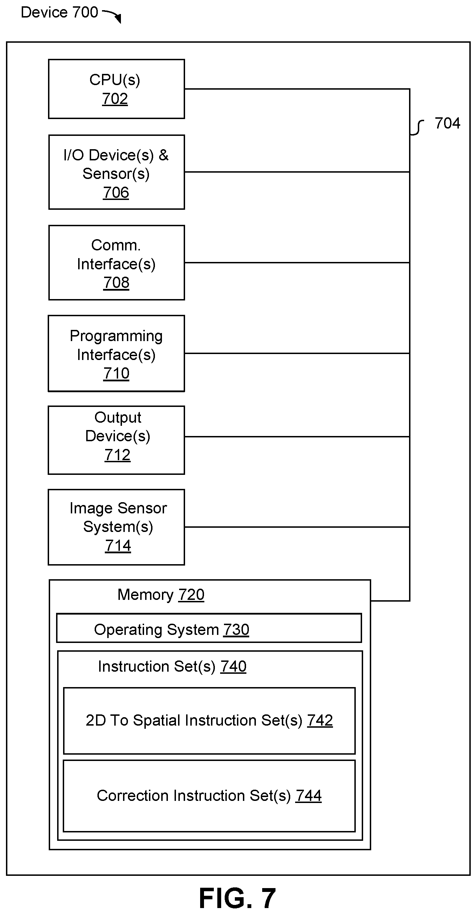

**Figure** 7 is a block diagram of an example device 700. Device 700 illustrates an exemplary device configuration for electronic device 105 of Figure 1. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 700 includes one or more processing units 702 (e.g., microprocessors, ASICs, FPGAs, GPUs, CPUs, processing cores, and/or the like), one or more input/output (I/O) devices and sensors 704, one or more communication interfaces 708 (e.g., USB, FIREWIRE, THUNDERBOLT, IEEE 802.3x, IEEE 802.11x, IEEE 802.14x, GSM, CDMA, TDMA, GPS, IR, BLUETOOTH, ZIGBEE, SPI, I2C, and/or the like type interface), one or more programming (e.g., I/O) interfaces 710, output devices (e.g., one or more displays) 712, one or more interior and/or exterior facing image sensor systems 714, a memory 720, and one or more communication buses 704 for interconnecting these and various other components.

In some implementations, the one or more communication buses 704 include circuitry that interconnects and controls communications between system components. In some implementations, the one or more I/O devices and sensors 706 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), one or more cameras (e.g., inward facing cameras and outward facing cameras of an HMD), one or more infrared sensors, one or more heat map sensors, and/or the like.

In some implementations, the one or more displays 712 are configured to present a view of a physical environment, a graphical environment, an extended reality environment, etc. to the user. In some implementations, the one or more displays 712 are configured to present content (determined based on a determined user/object location of the user within the physical environment) to the user. In some implementations, the one or more displays 712 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays 712 correspond to diffractive, reflective, polarized, holographic, etc. waveguide displays. In one example, the device 700 includes a single display. In another example, the device 700 includes a display for each eye of the user.

In some implementations, the one or more image sensor systems 714 are configured to obtain image data that corresponds to at least a portion of the physical environment 100. For example, the one or more image sensor systems 714 include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 714 further include illumination sources that emit light, such as a flash. In various implementations, the one or more image sensor systems 714 further include an on-camera image signal processor (ISP) configured to execute a plurality of processing operations on the image data.

In some implementations, sensor data may be obtained by device(s) (e.g., device 105 of Figure 1) during a scan of a room of a physical environment. The sensor data may include a spatial point cloud and a sequence of 2D images corresponding to captured views of the room during the scan of the room. In some implementations, the sensor data includes image data (e.g., from an RGB camera), depth data (e.g., a depth image from a depth camera), ambient light sensor data (e.g., from an ambient light sensor), and/or motion data from one or more motion sensors (e.g., accelerometers, gyroscopes, IMU, etc.). In some implementations, the sensor data includes visual inertial odometry (VIO) data determined based on image data. The spatial point cloud may provide semantic information about one or more elements of the room. The spatial point cloud may provide information about the positions and appearance of surface portions within the physical environment. In some implementations, the spatial point cloud is obtained over time, e.g., during a scan of the room, and the spatial point cloud may be updated, and updated versions of the spatial point cloud obtained over time. For example, a 3D representation may be obtained (and analyzed/processed) as it is updated/adjusted over time (e.g., as the user scans a room).

In some implementations, sensor data may be positioning information, some implementations include a VIO to determine equivalent odometry information using sequential camera images (e.g., light intensity image data) and motion data (e.g., acquired from the IMU/motion sensor) to estimate the distance traveled. Alternatively, some implementations of the present disclosure may include a simultaneous localization and mapping (SLAM) system (e.g., position sensors). The SLAM system may include a multidimensional (e.g., 3D) laser scanning and range-measuring system that is GPS independent and that provides real-time simultaneous location and mapping. The SLAM system may generate and manage data for a very accurate point cloud that results from reflections of laser scanning from objects in an environment. Movements of any of the points in the point cloud are accurately tracked over time, so that the SLAM system can maintain precise understanding of its location and orientation as it travels through an environment, using the points in the point cloud as reference points for the location.

In some implementations, the device 700 includes an eye tracking system for detecting eye position and eye movements (e.g., eye gaze detection). For example, an eye tracking system may include one or more infrared (IR) light-emitting diodes (LEDs), an eye tracking camera (e.g., near-IR (NIR) camera), and an illumination source (e.g., an NIR light source) that emits light (e.g., NIR light) towards the eyes of the user. Moreover, the illumination source of the device 700 may emit NIR light to illuminate the eyes of the user and the NIR camera may capture images of the eyes of the user. In some implementations, images captured by the eye tracking system may be analyzed to detect position and movements of the eyes of the user, or to detect other information about the eyes such as pupil dilation or pupil diameter. Moreover, the point of gaze estimated from the eye tracking images may enable gaze-based interaction with content shown on the near-eye display of the device 700.

The memory 720 includes high-speed random-access memory, such as DRAM, SRAM, DDR RAM, or other random-access solid-state memory devices. In some implementations, the memory 720 includes non-volatile memory, such as one or more magnetic disk storage devices, optical disk storage devices, flash memory devices, or other non-volatile solid-state storage devices. The memory 720 optionally includes one or more storage devices remotely located from the one or more processing units 702. The memory 720 includes a non-transitory computer readable storage medium.

In some implementations, the memory 720 or the non-transitory computer readable storage medium of the memory 720 stores an optional operating system 730 and one or more instruction set(s) 740. The operating system 730 includes procedures for handling various basic system services and for performing hardware dependent tasks. In some implementations, the instruction set(s) 740 include executable software defined by binary information stored in the form of electrical charge. In some implementations, the instruction set(s) 740 are software that is executable by the one or more processing units 702 to carry out one or more of the techniques described herein.

The instruction set(s) 740 includes 2D to spatial instruction set 742 and a correction instruction set 744. The instruction set(s) 740 may be embodied as a single software executable or multiple software executables.

The 2D to spatial instruction set 742 is configured with instructions executable by a processor to obtain 2D image data, estimating depth data for the image data, and generate an initial stereo image pair based on the image data and the depth data.

The correction instruction set 744 is configured with instructions executable by a processor to generating a complete stereo image pair by inpainting missing regions of the initial stereo image pair.

Although the instruction set(s) 740 are shown as residing on a single device, it should be understood that in other implementations, any combination of the elements may be located in separate computing devices. Moreover, Figure 7 is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

Those of ordinary skill in the art will appreciate that well-known systems, methods, components, devices, and circuits have not been described in exhaustive detail so as not to obscure more pertinent aspects of the example implementations described herein. Moreover, other effective aspects and/or variants do not include all of the specific details described herein. Thus, several details are described in order to provide a thorough understanding of the example aspects as shown in the drawings. Moreover, the drawings merely show some example embodiments of the present disclosure and are therefore not to be considered limiting.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, e.g., one or more modules of computer program instructions, encoded on computer storage medium for execution by, or to control the operation of, data processing apparatus. Alternatively, or additionally, the program instructions can be encoded on an artificially generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures. Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel. The operations described in this specification can be implemented as operations performed by a data processing apparatus on data stored on one or more computer-readable storage devices or received from other sources.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method comprising:
at an electronic device having a processor:
obtaining image data comprising multiple frames corresponding to at least a portion of a physical environment captured over time via an image capture device;
estimating depth data for the image data;
based on the image data and the depth data, generating a first stereo image pair for a first frame of the multiple frames, the first stereo image pair comprising a first image for a first eye view and second image for a second eye view, the first stereo image pair comprising a missing region; and
generating a second stereo image pair for the first frame by modifying the missing region using at least a second frame of the multiple frames of the image data.

2. The method of claim 1, wherein generating the second stereo image pair comprises utilizing an encoder-decoder process to fill the missing region with content.

3. The method of claim 2, wherein generating the complete stereo image pair comprises selectively utilizing patches of each image of the first stereo image pair in the encoder-decoder process, the patches identified based on a patch grid, a patch size, or a patch shape.

4. The method of claim 3, wherein the encoder utilizes only patches that are filled entirely with content and patches that are partially filled with content.

5. The method of any of claims 3-4, wherein the decoder only alters the appearance of patches that are partially filled with content and patches that are empty of content.

6. The method of any of claims 1-5, wherein generating the second stereo image pair comprises utilizing all of the multiple frames to fill the missing region with content.

7. The method of any of claims 1-6, wherein generating the second stereo image pair comprises utilizing a fixed number of prior frames and a current frame of the multiple frames to fill the missing region with content.

8. The method of any of claims 1-7, wherein generating the second stereo image pair comprises utilizing all prior frames of the multiple frames to fill the missing region with content.

9. The method of any of claims 1-8, wherein generating the second stereo image pair comprises adding random noise to the missing region and iteratively denoising the missing region using learned features that will be used to fill the missing region with content.

10. The method of any of claims 1-9, wherein the depth data correlates to distances of the portions of the image data from a viewpoint of the image capture device.

11. A system comprising:
a processor;
a computer-readable medium storing instructions that when executed by the processor cause the processor to perform operations comprising any one of the methods of claims 1-10.

12. A non-transitory computer-readable medium comprising instructions that when executed by a processor cause the processor to perform operations comprising any one of the methods of claims 1-10.
